# EUROPÄISCHE PATENTSCHRIFT

(11) **EP 2 496 348 B1**
(45) Veröffentlichungstag und Bekanntmachung des Hinweises auf die Patenterteilung: **06.01.2016**
(21) Anmeldenummer: 10771128.5
(22) Anmeldetag: 28.10.2010
(51) Int. Cl.: B01J 23/889, B01J 23/00, B01J 37/08, C07C 1/04

(54) **EISEN- UND MANGANHALTIGER HETEROGENKATALYSATOR UND VERFAHREN ZUR HERSTELLUNG VON OLEFINEN DURCH UMSETZUNG VON KOHLENMONOXID MIT WASSERSTOFF**
HETEROGENEOUS CATALYST CONTAINING IRON AND MANGANESE AND METHOD FOR PRODUCING OLEFINS BY CONVERTING CARBON MONOXIDE WITH HYDROGEN
CATALYSEUR HÉTÉROGÈNE CONTENANT DU FER ET DU MANGANÈSE ET PROCÉDÉ DE FABRICATION D'OLÉFINES PAR RÉACTION DE MONOXYDE DE CARBONE AVEC DE L'HYDROGÈNE

(30) Priorität: 06.11.2009 EP 09175230
(43) Veröffentlichungstag der Anmeldung: 12.09.2012
(73) Patentinhaber: BASF SE, 67056 Ludwigshafen (DE)
(72) Erfinder: STEINER, Jochen, 64625 Bensheim (DE); BAY, Kerem, 67063 Ludwigshafen (DE); WERNER, Vera, 67360 Lingenfeld (DE); AMANN, Jürgen, 67373 Dudenhofen (DE); BUNZEL, Stefan, 67122 Altrip (DE); MOßBACHER, Claudia, 67146 Deidesheim (DE); MÜLLER, Joachim, 67269 Grünstadt (DE); SCHWAB, Ekkehard, 67434 Neustadt (DE); WEBER, Markus, 67117 Limburgerhof (DE)
(86) Internationale Anmeldenummer: PCT/EP2010/066377
(87) Internationale Veröffentlichungsnummer: WO 2011/054734

(56) Entgegenhaltungen:
- WO-A2-2009/013174
- DE-A1- 2 507 647
- G.C. MAITI ET AL.: "Iron/Manganese Oxide Catalysts for Fischer-Tropsch Synthesis. Part I: Structural and Textural Changes by Calcination, Reduction and Synthesis", APPLIED CATALYSIS, Bd. 5, 1983, Seiten 151-170, XP002616561,
- X. LI ET AL.: "Fischer-Tropsch synthesis on Fe-Mn ultrafine catalysts", CATALYSIS LETTERS, Bd. 23, 1994, Seiten 245-250, XP002616562,
- K.B.JENSEN, F.E. MASSOTH: "Studies on Iron-Manganese Oxide Carbon Monoxide Catalysts I. Structure of Reduced Catalyst", JOURNAL OF CATALYSIS, Bd. 92, 1985, Seiten 98-108, XP002616563,

## Beschreibung

Die vorliegende Erfindung betrifft einen eisen- und manganhaltigen Heterogenkatalysator, ein Verfahren zu seiner Herstellung und ein Verfahren zur Herstellung von Olefinen durch Umsetzung von Kohlenmonoxid mit Wasserstoff in Gegenwart des eisen- und manganhaltigen Heterogenkatalysators.

Es ist bekannt, dass niedrigere Olefine aus Kohlenmonoxid (CO) und Wasserstoff (H₂) an Metallkatalysatoren, z. B. Eisen- oder Kobalt-Katalysatoren, hergestellt werden können. Als Katalysatorvorläufer werden üblicherweise Eisenoxide eingesetzt. Solche Katalysatoren sind z. B. in US 4,544,674, US 5,100,856, US 5,118,715, US 5,248,701, US 2004/0127582 A1, H.P. Withers et al., Ind. Eng. Chem. Res. 1990, 29, Seiten 1807 bis 1814, und M.E. Dry et al., Stud. Surf. Sci. Catal., Vol. 152, 2004, Seiten 533 bis 600, beschrieben.

Diese Umsetzung wird auch Fischer-Tropsch-Synthese genannt.

Herkömmliche Verfahren zur Fischer-Tropsch-Synthese produzieren Kohlenwasserstoffe in einem breiten Bereich der Produktverteilung.
Grundsätzlich kann dieser Bereich der Produktverteilung durch die sog. Anderson-Schulz-Flory-Verteilung charakterisiert werden. Vergl. auch: M. Janardanarao, Ind. Eng. Chem. Res. 1990, 29, Seiten 1735-53.

Ebenso ist bekannt, dass die Zusammensetzung der beim Fischer-Tropsch-Prozess gebildeten Kohlenwasserstoffe durch die Wahl der eingesetzten Katalysatoren, der Reaktortypen und der Reaktionsbedingungen stark beeinflusst werden kann.

Z. B. ist bekannt, dass die Produktverteilung durch Anwendung von hohen Temperaturen in Gegenwart modifizierter Eisenkatalysatoren in Richtung niedrigere Olefine verschoben werden kann: B. Büssemeier et al., Hydrocarbon Processing, Nov. 1976, Seiten 105 bis 112.

Hauptproblem ist hier die Bildung großer Mengen an unerwünschtem Methan (CH₄). Darüber hinaus sind die erforderlichen Eisenoxide als Ausgangsstoff für den Katalysator schwierig zu reduzieren.

DE 28 22 656 A1 (Inst. Fr. du Petrole) offenbart ein Fischer-Tropsch-Verfahren, wobei man den Katalysator durch Niederschlagen eines metallorganischen Eisen- und/oder Kobalt- und/oder Nickel-Aggregats auf einem anorganischen Träger erhält. Das Niederschlagen des Aggregats auf dem Träger wird durch Imprägnieren des Trägers mit einer Lösung des Aggregats bewirkt. Nach diesem Verfahren sollen selektiv C2-C4-Olefine ("niedere Olefine") und nur geringe Mengen an Methan entstehen. Der Hauptnachteil dieser Katalysatoren besteht darin, dass die aktiven Katalysatorbestandteile unter den Reaktionsbedingungen flüchtig sein können, was einen Metallverlust bedeutet, und dass sie toxisch sind.

DE 29 19 921 A1 (Vielstich et al.) beschreibt ein weiteres Fischer-Tropsch-Verfahren, in dem man Katalysatoren einsetzt, die als wesentliche Katalysatorkomponente polykristalline Eisenwhisker enthalten. Diese Eisenwhisker werden durch thermische Zersetzung von Eisenpentacarbonyl im magnetischen Feld erhalten. Die Eisenwhisker werden bevorzugt als Pellets eingesetzt. Gemäß der Lehre dieser DE-Schrift werden unter polykristallinen Whiskern feine Eisenfäden mit mikroskopisch kleinen Einkristallbereichen verstanden (Seite 5, 3. Absatz). Die fadenförmigen Primärpartikel resultieren in ihrer Form aus dem Wachstum im magnetischen Feld. Die Fäden haben eine Länge von z. B. 0,06 bis 1 mm.
Die beiden Bilder in ,Fachberichte für Oberflächentechnik, Juli/August 1970, Seite 146, zeigen SEM-Aufnahmen von solchem Carbonyleisenpulver mit fadenförmigen Primärpartikeln.
In ,Fachberichte für Oberflächentechnik, Juli/August 1970, Seiten 145 bis 150, werden diese Eisenwhisker auch als Metallhaare beschrieben, die aus einem Kristallwachstum vom Metall in Fadenform, entgegen einem normalen Kristallwachstum, resultieren (Seite 145, 2. Absatz). In den polykristallinen Eisenwhiskern beträgt das Verhältnis von Länge zu Durchmesser z. B. ≥ 10.
Solche polykristallinen Eisenwhisker sind auch beschrieben in H.G.F. Wilsdorf et al., Z. Metallkde. 69 (11), 1978, Seiten 701 bis 705.

DE 25 07 647 A1 (Kölbel et al.) beschreibt zur Herstellung von Kohlenwasserstoffen und sauerstoffhaltigen Verbindungen aus CO und H₂ die Verwendung von Katalysatoren die Mangan und optional Eisen enthalten.

US 2,417,164 (Standard Oil Comp.) betrifft Verfahren zur Synthese von flüssigen Kohlenwasserstoffen aus CO und H₂ in Gegenwart von Metallkatalysatoren, darunter Carbonyleisenpulver.

WO 07/060186 A1 (BASF AG) lehrt Verfahren zur Herstellung von Olefinen aus Synthesegas unter Einsatz von Fischer-Tropsch-Katalysatoren in einer Reaktionskolonne.

WO 09/013174 A2 (BASF SE) betrifft ein Verfahren zur Herstellung von kurzkettigen, gasförmigen Olefinen durch Umsetzung von Kohlenmonoxid mit Wasserstoff in Gegenwart eines eisenhaltigen Heterogenkatalysators, wobei man als Katalysator Carbonyleisenpulver mit sphärischen Primärpartikeln einsetzt.

Promotoren in Eisenkatalysatoren für Fischer-Tropsch-Synthesen sind z. B. beschrieben in der o. g. WO 09/013174 A2 und in M. Janardanarao, Ind. Eng. Chem. Res. 1990, 29, Seiten 1735 bis 1753, und C.D. Frohning et al. in "Chemierohstoffe aus Kohle", 1977, Seiten 219 bis 299.
Als geeignete Promotoren kann der Katalysator z. B. eines oder mehrere der Elemente Kalium, Vanadium, Kupfer, Nickel, Kobalt, Mangan, Chrom, Zink, Silber, Gold, Calcium, Natrium, Lithium, Caesium, Platin, Palladium, Ruthenium, Schwefel, jeweils in elementarer Form oder in ionischer Form, enthalten.

Die EP-Patentanmeldung Nr. 08164085.6 (BASF SE) vom 10.09.08 beschreibt ein integriertes Verfahren, wobei in einer Anlage A reines Carbonyleisenpulver (CEP) durch Zersetzung von reinem Eisenpentacarbonyl (EPC) hergestellt wird, bei der Zersetzung des EPC freiwerdendes Kohlenmonoxid (CO) zur Herstellung von weiterem CEP aus Eisen in Anlage A eingesetzt wird oder einer verbundenen Anlage B zur Herstellung von Synthesegas zugeführt wird oder einer verbundenen Anlage C zur Herstellung von Kohlenwasserstoffen aus Synthesegas zugeführt wird, und man das in Anlage A hergestellte CEP als Katalysator oder Katalysatorkomponente in einer verbundenen Anlage C zur Herstellung von Kohlenwasserstoffen aus Synthesegas aus Anlage B einsetzt.

Zwei parallele europäische Patentanmeldungen mit gleichem Anmeldetag (alle BASF SE) betreffen bestimmte eisenhaltige Heterogenkatalysatoren und ihre Verwendung in Verfahren zur Herstellung von Olefinen durch Umsetzung von Kohlenmonoxid mit Wasserstoff.

WO 2009/013174 A2 offenbart ein Verfahren zur Herstellung von Olefinen durch Umsetzung von Kohlenmonoxid mit Wasserstoff in Gegenwart eines eisenhaltigen Heterogenkatalysators, wobei man als Katalysator Carbonyleisenpulver mit sphärischen Primärpartikeln einsetzt.

DE 25 07 647 A1 betrifft ein Verfahren zur Synthese von ungesättigten und gesättigten Kohlenwasserstoffen und sauerstoffhaltiger Verbindungen durch katalytische Hydrierung von Kohlenoxid bei Temperaturen von 220 bis 340 °C und Drucken von 1 bis 60 bar, gekennzeichnet durch die Verwendung neuartiger Katalysatoren, deren katalytisch wirkendes Element aus Mangan besteht oder aus Element-Kombinationen in denen Mangan mit mindestens 50 % und Eisen mit weniger als 50 % vertreten ist, wobei die Katalysatoren zur Überführung in den syntheseaktiven Zustand (Formierung) mit Kohlenoxid und anschließend mit Wasserstoff oder mit Gemischen dieser Gase vorbehandelt werden bei Temperaturen, die 10 bis 50 °C höher sind als die zur Erreichung der optimalen Aktivität notwendige Anfangs-Betriebstemperatur.

G.C. Maiti et al., Applied Catalysis, Bd. 5, 1998, Seiten 151-170 beschäftigt sich mit den strukturellen Veränderungen von gemeinsam ausgefällten Fe/Mn-Oxid Katalysatoren während der Kalzinierung, Reduktion und Fischer-Tropsch-Synthese.

X. Li et al., Catalysis letters, Bd. 23, 1994, Seiten 245-250 beschäftigt sich mit der Fischer-Tropsch-Synthese, die mit Hilfe von ultrafeinen Fe/Mn-Katalysatoren durchgeführt wird, welche durch ein spezielles Zersetzungsverfahren von Fe/Me-Komplexen hergestellt werden.

Der vorliegenden Erfindung lag die Aufgabe zugrunde, unter Umgehung von Nachteilen des Stands der Technik, einen verbesserten Katalysator und ein verbessertes wirtschaftliches Verfahren zur Herstellung von Olefinen aufzufinden. Das Verfahren sollte insbesondere möglichst selektiv niedere Olefine (z. B. C2-C6 - Olefine, besonders C2-C4 - Olefine), besonders Ethen, Propen und 1-Buten liefern, bei gleichzeitig möglichst geringem Anfall von Methan, Kohlenstoffdioxid, Alkanen (z. B. C2-C6 - Alkanen, besonders C2-C4-Alkanen) und höheren Kohlenwasserstoffen, also Kohlenwasserstoffen mit z. B. sieben oder mehr C-Atomen (C7+ Fraktion), besonders fünf oder mehr C-Atomen (C5+ Fraktion). Bestandteile des Katalysators sollten unter den Reaktionsbedingungen nicht flüchtig sein.
Weiterhin sollte sich der Katalysator durch eine verkürzte Aktivierungsphase auszeichnen. Die aus der Fischer-Tropsch Synthese bekannte Einlaufzeit bis das gewünschte Produktspektrum erreicht wird, sollte verkürzt werden.
Der Katalysator sollte eine verbesserte Standzeit und erhöhte mechanische Stabilität aufweisen. Die erhöhte Stabilität ist insbesondere vorteilhaft bei Einsatz des Katalysators in einer Wirbelschicht oder in Slunyreaktoren oder auch in Blasensäulen.

Erfindungsgemäß wurden u. a. folgende Aspekte erkannt:
Die im Schritt II unter zumindest teilweiser Agglomerierung entstehenden metallischen Sekundärpartikel, besonders in einer wirbelfähigen Fraktion mit Partikeldurchmessern im Bereich von 10 - 250 µm (siehe unten), sind aufgrund ihrer chemischen Zusammensetzung ideale Katalysator-Prekursoren für die Synthese niederer Olefine aus CO-reichen Synthesegasen. Zusätzlich vorteilhaft ist die geringe Oberfläche der Partikel, die bevorzugt unter 2 m²/g liegt (siehe unten).
Insbesondere von Vorteil ist der geringe Sauerstoffgehalt der metallischen Sekundärpartikel, wodurch eine Reduktion - und somit Aktivierung des Katalysators - sehr vereinfacht ist.

Demgemäß wurde ein Verfahren zur Herstellung eines eisen- und manganhaltigen Heterogenkatalysators gefunden, welches dadurch gekennzeichnet ist, dass es folgende Schritte umfasst:
I. Thermische Zersetzung von gasförmigem Eisenpentacarbonyl unter Erhalt von Carbonyleisenpulver mit sphärischen Primärpartikeln,
II. Behandlung von in Schritt I erhaltenem Carbonyleisenpulver mit Wasserstoff, wobei die metallischen sphärischen Primärpartikel zumindest teilweise agglomerieren,
III. oberflächliche Oxidation der Eisenpartikel aus Schritt II, d.h. Agglomerate = Sekundärpartikel, sowie ggf. noch vorhandene Primärpartikel, unter Eisenoxidbildung,
IV. In-Kontakt-bringen der Partikel aus Schritt III mit einer wässrigen Lösung einer Manganverbindung,
V. Trocknung in Gegenwart von Sauerstoff und nachfolgende Kalzination in Abwesenheit von Sauerstoff, wobei zunächst sauerstoffhaltige Manganverbindungen auf den Partikeln resultieren, die schließlich mit dem Eisenoxid zu einem Mischoxid der Formel MnₓFe₃₋ₓO₄ reagieren, mit 0 < x ≤ 2.

Daneben wurde ein eisen- und manganhaltiger Heterogenkatalysator gefunden, welcher nach dem obigen Verfahren herstellbar ist, wobei in Schritt II die Ausbildung von metallischen Sekundärpartikeln mit BET-Oberflächen von kleiner 2 m²/g erfolgt und in Schritt V die Trocknung in Gegenwart von Sauerstoff bei 50 bis 150 °C erfolgt.

Weiter wurde demgemäß ein Verfahren zur Herstellung von Olefinen durch Umsetzung von Kohlenmonoxid mit Wasserstoff in Gegenwart eines Katalysators gefunden, welches dadurch gekennzeichnet ist, dass man als Katalysator den o. g. eisen- und manganhaltigen Heterogenkatalysator einsetzt.

Der Anteil an im Schritt I erhaltenen sphärischen Primärpartikeln im Carbonyleisenpulver beträgt bevorzugt > 90 Gew.-%, besonders > 95 Gew.-%, ganz besonders > 98 Gew.-%.

Die im Schritt I erhaltenen sphärischen Primärpartikel weisen bevorzugt einen Durchmesser im Bereich von 0,01 bis 50 µm, besonders im Bereich von 0,1 bis 20 µm, ganz besonders im Bereich von 0,5 bis 15 µm, weiter besonders im Bereich von 0,7 bis 10 µm, weiter besonders im Bereich von 1 bis 10 µm, auf.

Der Eisengehalt der sphärischen Primärpartikel beträgt bevorzugt > 97 Gew.-%, besondern ≥ 99 Gew.-%, insbesondere ≥ 99,5 Gew.-%.
Das Eisen liegt bevorzugt in seiner thermodynamisch stabilsten Modifikation (alpha-Eisen) vor.

Bevorzugt sind die sphärischen Primärpartikel frei von Poren.

Das Carbonyleisenpulver zeichnet sich im Besonderen dadurch aus, dass es neben den sphärischen Primärpartikeln keine fadenförmigen Primärpartikel, insbesondere nicht die in DE-A1-29 19 921 und ,Fachberichte für Oberflächentechnik, Juli/August 1970, Seiten 145 bis 150, (siehe oben) offenbarten Eisenwhisker, enthält.

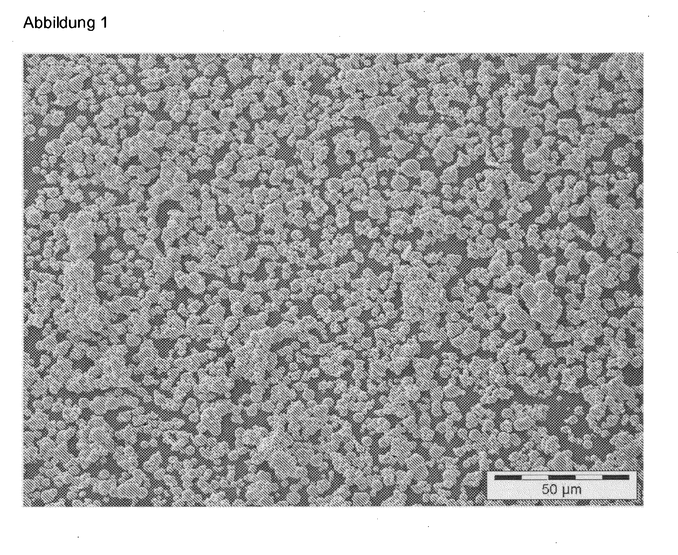

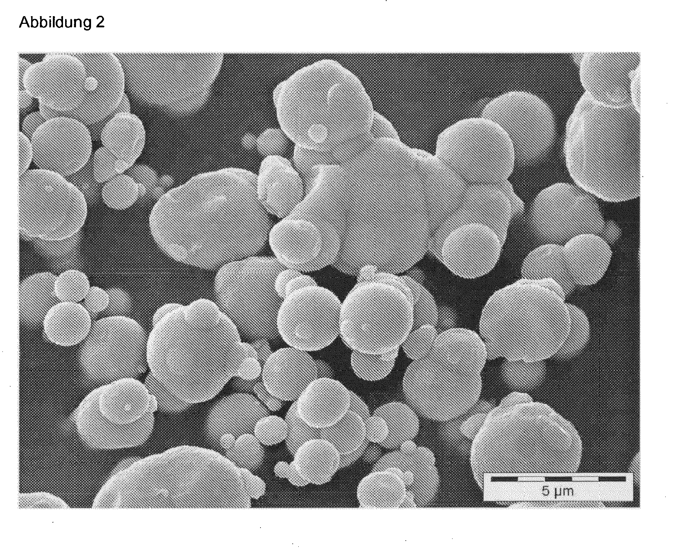

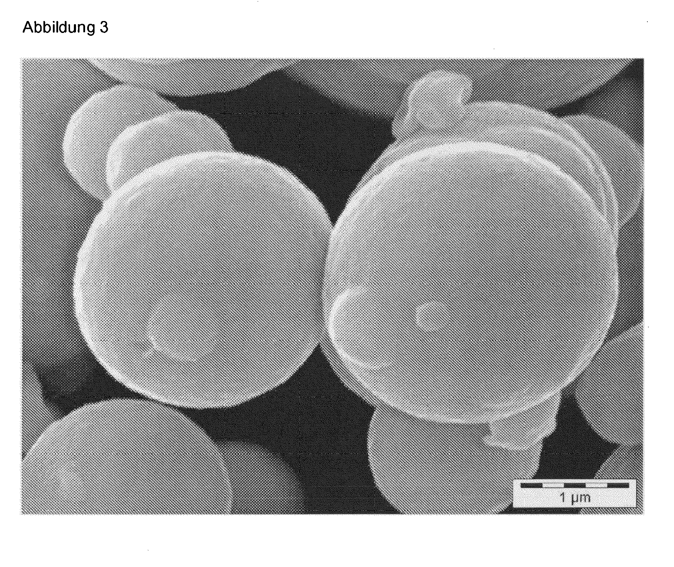

Die Abbildungen 1 bis 3 zeigen SEM-Aufnahmen von bevorzugt eingesetztem Carbonyleisenpulver mit sphärischen Primärpartikeln vor der Wasserstoffbehandlung gemäß Schritt II.

Im erfindungsgemäßen Verfahren einsetzbares Carbonyleisenpulver mit sphärischen Primärpartikeln ist z. B. unter der Bezeichnung "Carbonyleisenpulver CN" von BASF AG bzw. jetzt BASF SE, D-67056 Ludwigshafen, erhältlich.

Das Carbonyleisenpulver mit sphärischen Primärpartikeln wird durch thermische Zersetzung von gasförmigem Eisenpentacarbonyl (Fe[CO]s), welches besonders durch Destillation zuvor aufgereinigt wurde, erhalten.

Das im Schritt I erhaltene Produkt wird in Schritt II mit Wasserstoff behandelt.
Diese Behandlung der Primärpartikel mit Wasserstoff erfolgt bevorzugt bei einer Temperatur im Bereich von 300 bis 600 °C. Durch diese Behandlung wird der Restgehalt an Kohlenstoff, Stickstoff und auch Sauerstoff im CEP erniedrigt. (DE 528 463 C1, 1927). Hierbei werden die sphärischen Primärpartikel zumindest teilweise, z. B. zu 25 bis 95 Gew.-%, agglomeriert.

Die im Schritt II unter zumindest teilweiser Agglomerierung entstehenden metallischen Sekundärpartikel weisen bevorzugt Partikeldurchmesser im Bereich von 10 bis 250 µm, besonders bevorzugt zwischen 50 und 150 µm, auf. Solche wirbelfähigen Partikelfraktionen können durch entsprechendes Sieben erhalten werden.
In Schritt II erfolgt die Ausbildung von metallischen Sekundärpartikeln mit BET-Oberflächen (DIN ISO 9277) von bevorzugt kleiner 2 m²/g, insbesondere von 0,2 bis 1,9 m²/g.

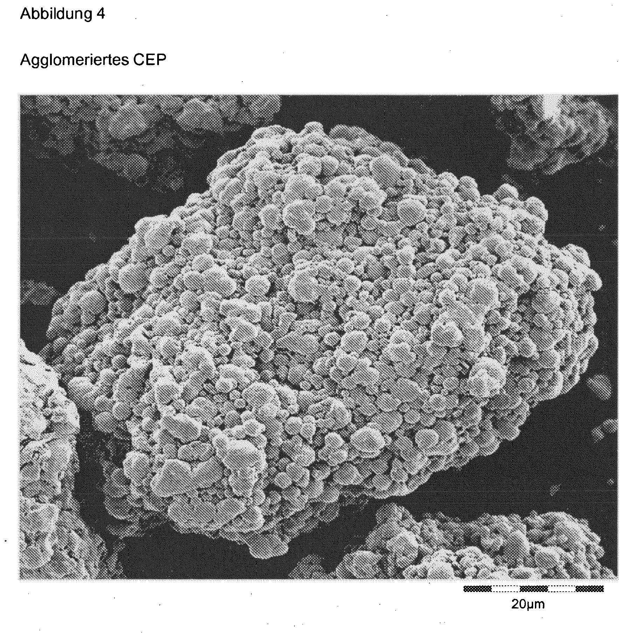

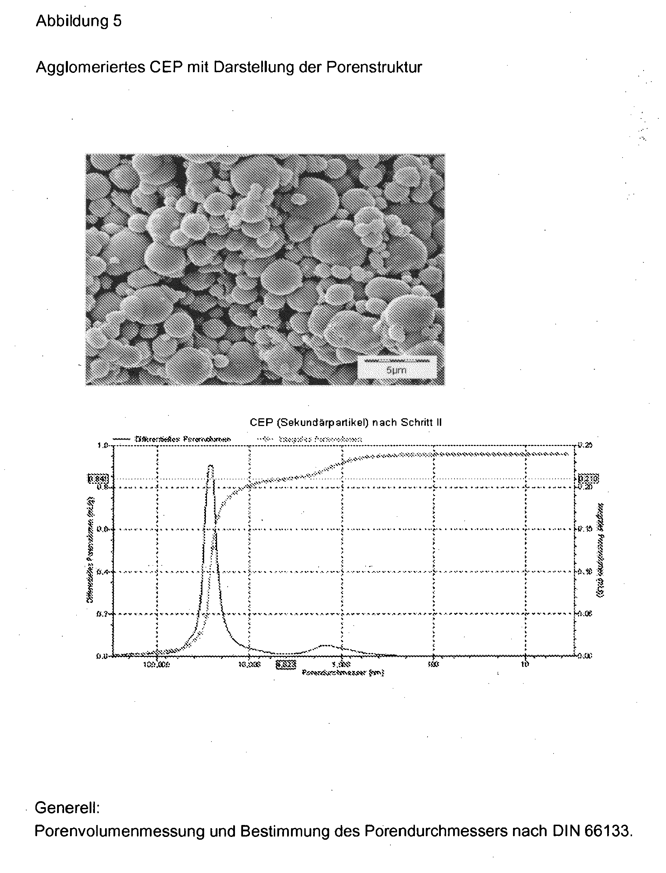

Abbildung 4 und 5 zeigen beispielhaft nach der Wasserstoffbehandlung erhaltene Agglomerate.

In Schritt III werden die Eisenpartikel aus Schritt II (das heißt die Agglomerate = Sekundärpartikel, sowie ggf. noch vorhandene Primärpartikel) kontrolliert oberflächlich anoxidiert (passiviert). Bei dieser Oxidation bildet sich an der Oberfläche der Partikel Eisenoxid. Die Oxidation, auch Passivierung genannt, erfolgt bevorzugt mittels Sauerstoff. Der Sauerstoff kann in Form von sauerstoffhaltigem (O₂-haltigem) Wasser eingesetzt werden.
Die Oxidation erfolgt bevorzugt bei Temperaturen unter 150 °C, besonders bei einer Temperatur kleiner 50 °C, insbesondere bei einer Temperatur im Bereich von 20 bis 45°C, z. B. in mit Inertgas verdünnter Luft, sauerstoffhaltigem Inertgas oder durch In-Kontakt-bringen der Partikel mit sauerstoffhaltigem Wasser, hierbei bevorzugt unter Rühren. Geeignete Inertgase sind Stickstoff oder Edelgase, wie He, Ne, insbesondere Argon.

In Schritt IV werden die oberflächlich anoxidierten (passivierten) Partikel bevorzugt mit einer wässrigen Mangansalzlösung, besonders einer wässrigen Lösung von Mangannitrat, Mangancarbonat oder eines organischen Mangansalzes, in Kontakt gebracht, auch Imprägnierung oder Tränkung genannt.

In einer besonderen Ausführungsform können den wässrigen Mangansalzlösungen Verbindungen zugesetzt werden, die die Oberflächenspannung der Tränklösung herabsetzen, wie z. B. Tenside.

Besonders bevorzugtes Mangansalz ist Mangannitrat. Beispiele für organische Mangansalze sind Manganacetat, Manganoxalat und Manganacetylacetonat.

In Schritt V erfolgt die Trocknung in Gegenwart von Sauerstoff, bevorzugt unter Luft, insbesondere bei einer Temperatur im Bereich von 50 bis 150 °C, bevorzugt zwischen 55 und 120 °C.

Anschließend wird eine Kalzination in Abwesenheit von Sauerstoff (O₂), bevorzugt unter Inertgas (d.h. in einer Inertgasatmosphäre), besonders bei einer Temperatur im Bereich von 500 bis 800 °C, insbesondere 600 bis 750 °C, durchgeführt. Geeignete Inertgase gehen unter den Bedingungen keine Reaktion mit dem Eisen und den Dotierstoffen ein und sind z. B. Edelgase, wie He, Ne, insbesondere Ar.
Dabei bilden sich durch Reaktion der gebildeten sauerstoffhaltigen Manganverbindungen mit Eisenoxid Mischoxide, insbesondere Spinelle, der Formel MnₓFe₃₋ₓO₄, wobei der Wert x im Bereich > 0 bis ≤ 2, insbesondere im Bereich > 0,25 bis ≤ 1,5, liegt.

Die Dotierung des im Schritt V erhaltenen Katalysators mit Mn beträgt bevorzugt im Bereich von 0,5 bis 4 Gew.-%, besonders bevorzugt 0,6 bis 2 Gew.-%, ganz besonders bevorzugt 0,7 bis 1,5 Gew.-%, z. B. 0,8 bis 1,3 Gew.-%, jeweils bezogen auf Eisen und jeweils als Element in der Oxidationsstufe 0 berechnet.

In einer besonderen Variante werden die Partikel zusätzlich mit insgesamt im Bereich von 0,01 bis 1 Gew.-%, besonders 0,05 bis 0,5 Gew.-%, (jeweils bezogen auf Eisen und jeweils als Element in der Oxidationsstufe 0 berechnet) an Alkalimetallionen und/oder Erdalkalimetallionen, insbesondere Kaliumionen und/oder Natriumionen, dotiert.

Diese zusätzliche Dotierung erfolgt besonders nach Schritt V durch In-Kontakt-bringen, weiter besonders in Schritt V zwischen der Trocknung und der Kalzination durch In-Kontakt-bringen, bevorzugt in Schritt IV durch, bevorzugt simultanes, In-Kontakt-bringen der Partikel (Sekundärpartikel und ggf. noch vorhandene Primärpartikel) mit einer wässrigen Lösung einer Alkalimetall- und/oder Erdalkalimetallverbindung.

In einer besonderen Ausgestaltung der Erfindung werden zwischen den Schritten II und III zusätzlich die folgenden Schritte IIa und IIb durchgeführt.

In Schritt IIa werden die Agglomerate bevorzugt mit flüssigem oder gasförmigem Eisenpentacarbonyl in Kontakt gebracht. Besonders bevorzugt ist flüssiges Eisenpentacarbonyl.
Dazu werden die metallischen Sekundärpartikel z. B. in einen mit Argon inertisierten Behälter eingefüllt und bei erhöhter Temperatur, wie z. B. 70 bis 150 °C, insbesondere z. B. bei einer Behälter-Innentemperatur von 105 °C, getrocknet.
Danach wird Eisenpentacarbonyl portionsweise (z. B. 5 Vol.% bezogen auf die Menge an Carbonyleisenpulver) z. B. durch ein Einleitungsrohr flüssig zudosiert.

Das alternative In-Kontakt-bringen mit gasförmigem Eisenpentacarbonyl kann z. B. in einer Wirbelschicht erfolgen, besonders bei einer Temperatur im Bereich von 120 bis 175 °C. Es erfolgt bevorzugt bei einem EPC-Partialdruck (absolut) im Bereich von 0,7 bis 1 bar.

In Schritt IIb erfolgt die thermische Zersetzung von Eisenpentacarbonyl bevorzugt bei einer Temperatur im Bereich von 150 bis 350 °C, besonders im Bereich von 150 bis 200 °C.
Z. B. wird das Gefäß, in dem sich das Material aus Schritt IIa befindet, auf eine Innentemperatur im Bereich von bevorzugt 150 bis 180 °C geheizt und die Zersetzungsreaktion des aufgebrachten EPCs bevorzugt mit einem IR-Spektrometer verfolgt. Hat der CO-Gehalt des Abgases sein Maximum überschritten, wird das Gefäß wieder auf z. B. 105 °C abgekühlt.

Je nach gewünschtem Verfüllungsgrad der Poren wird die Prozedur der beiden Schritte IIa und IIb wiederholt.

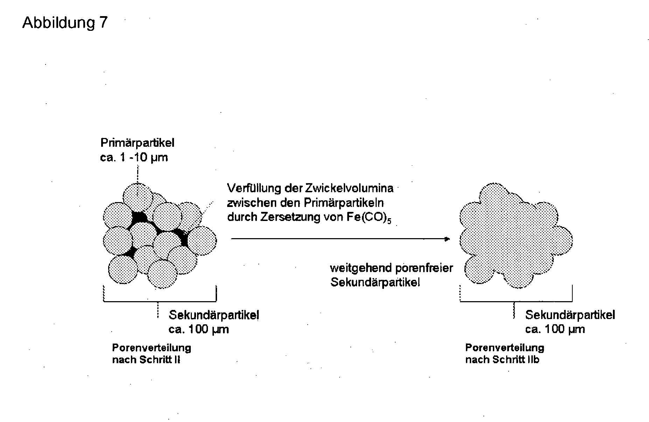

Im Schritt IIb werden überwiegend poren- und hohlraumfreie Sekundärpartikel erhalten. Die in Schritt II erhaltenen Sekundärpartikel weisen Zwickelporen zwischen den sphärischen Primärpartikeln auf (Porendurchmesser insbesondere < 4000 nm). Die Zwickelporen, insbesondere die Zwickelporen mit Durchmessern < 4000 nm, stellen somit intrapartikuläre Poren dar (Abbildung 5 und 7), während die gemessenen Poren mit Durchmessern insbesondere > 4000 nm als interpartikuläre Poren interpretiert werden können (resultierend aus dem Zwickelvolumen der Sekundärpartikel).
Durch die Behandlung der Sekundärpartikel mit Eisenpentacarbonyl gelingt es, die Zwickelporen zwischen den sphärischen Primärpartikeln, insbesondere mit Durchmessern im Bereich < 4000 nm, zu verfüllen. Man erhält somit überwiegend poren- und hohlraumfreie Sekundärpartikel, die besonders dadurch gekennzeichnet sind, dass das differentielle Porenvolumen mit Porendurchmessern im Bereich < 4000 nm zu < 10 %, in besonderer Ausführung zu < 5 %, zu dem gemessenen integralen Porenvolumen der Sekundärpartikel beiträgt.
Die Menge an Eisenpentacarbonyl, die zur Verfüllung der Poren mit einem Durchmesser insbesondere von < 4000 nm notwendig ist, wird bevorzugt mittels Porenvolumenmessung per Quecksilber Porosimetrie (DIN 66133) bestimmt.

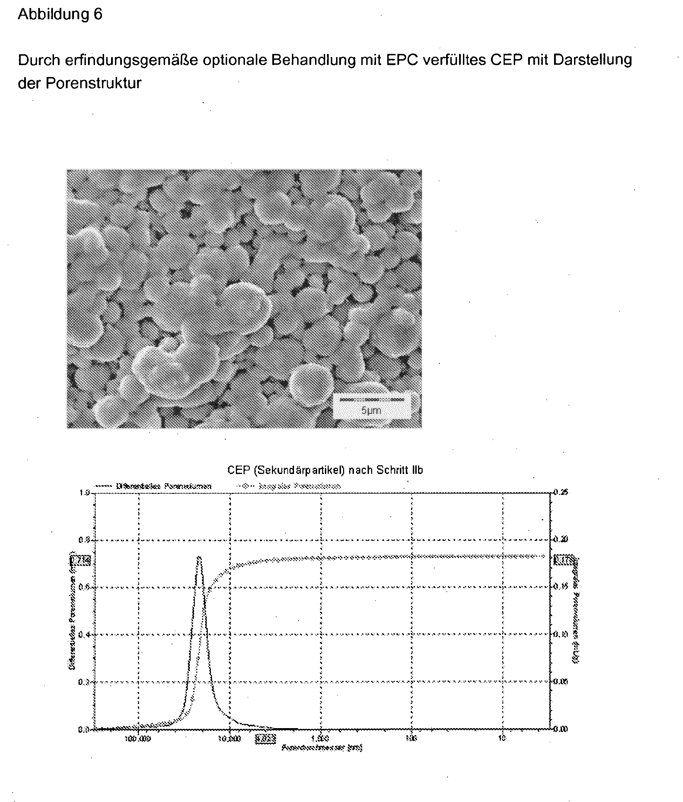

Im Schritt IIb erhaltene Partikel sind beispielhaft in Abbildung 6 zu sehen.

Der erfindungsgemäße eisen- und manganhaltige Katalysator ist besonders bevorzugt nicht auf einem Trägermaterial aufgebracht.

Im erfindungsgemäßen Verfahren kann der, ggf. dotierte, eisen- und manganhaltige Heterogenkatalysator in Form von Pellets eingesetzt werden.

Die Pellets werden durch dem Fachmann bekannte Methoden erhalten. Bevorzugte Formen der Pellets sind Tabletten und Ringe.

Die Pellets können vor ihrem Einsatz im erfindungsgemäßen Verfahren auch wieder zerkleinert werden, z. B. durch Mahlung.

Der Katalysator kann vor seinem Einsatz im erfindungsgemäßen Verfahren durch Behandlung mit Wasserstoff und/oder Kohlenmonoxid bei erhöhter Temperatur, insbesondere bei Temperaturen oberhalb von 300 °C, in einen syntheseaktiveren Zustand überführt werden. Diese zusätzliche Aktivierung ist jedoch nicht unbedingt erforderlich.

Im erfindungsgemäßen Verfahren werden die Edukte Kohlenmonoxid und Wasserstoff bevorzugt in Form von Synthesegas eingesetzt.

Das Synthesegas kann nach allgemein bekannten Verfahren (wie z. B. beschrieben in Weissermel et al., Industrial Organic Chemistry, Wiley-VCH, Weinheim, 2003, Seiten 15 bis 24), wie beispielsweise durch Umsetzung von Kohle oder Methan mit Wasserdampf, oder durch partielle Oxidation von Methan hergestellt werden. Vorzugsweise weist das Synthesegas ein Molverhältnis von Kohlenmonoxid zu Wasserstoff im Bereich von 3 : 1 bis 1 : 3 auf. Besonders bevorzugt wird ein Synthesegas eingesetzt, das ein Mischungs-Molverhältnis von Kohlenmonoxid zu Wasserstoff im Bereich von 2 : 1 bis 1 : 2 aufweist.

In einer besonderen Ausführungsform des erfindungsgemäßen Verfahrens enthält das Synthesegas Kohlendioxid (CO₂). Der Gehalt an CO₂ liegt bevorzugt im Bereich von 1 bis 50 Gew.-%.

Das erfindungsgemäße Verfahren wird bevorzugt bei einer Temperatur im Bereich von 200 bis 500 °C, besonders 300 bis 400 °C, durchgeführt.

Der Absolutdruck liegt bevorzugt im Bereich von 1 bis 100 bar, besonders 5 bis 50 bar.

Die WHSV (Weight Hourly Space Velocity) liegt bevorzugt im Bereich von 100 bis 10000, besonders bevorzugt 300 bis 5000, Volumenteile Feed-Strom pro Masseanteil Katalysator und Stunde (l/kg•h).

Bevorzugte Reaktoren zur Durchführung des erfindungsgemäßen Verfahrens sind: Wirbelschichtreaktor, Festbettreaktor, Suspensionsreaktor, Mikroreaktor.

Im Wirbelschicht-, Mikro- und Suspensionsreaktor wird der Katalysator bevorzugt in Pulverform eingesetzt.

Das Pulver kann auch erhalten werden durch Mahlung von zuvor hergestellten Pellets.

Im Festbettreaktor wird der Katalysator als Formkörper, bevorzugt in Form von Pellets, eingesetzt.

Der Einsatz solcher Reaktoren für die Fischer-Tropsch-Synthese ist z. B. beschrieben in C.D. Frohning et al. in "Chemierohstoffe aus Kohle", 1977, Seiten 219 bis 299, oder B.H. Davis, Topics in Catalysis, 2005, 32 (3-4), Seiten 143 bis 168.

Das erfindungsgemäße Verfahren liefert ein Produktgemisch enthaltend Olefine mit einer Olefin-Kohlenstoff-Selektivität, insbesondere einer α-Olefin-Kohlenstoff-Selektivität, für den C2-C4 - Bereich von bevorzugt mindestens 30 %, z. B. im Bereich von 30 bis 50 %. Bei der Selektivitätsangabe wird gebildetes Kohlendioxid nicht berücksichtigt (d.h. exklusive CO₂).

In einer besonderen Ausführungsform erhält man ein Produktgemisch enthaltend Olefine mit einer Olefin-Kohlenstoff-Selektivität für den C2-C4 - Bereich von mindestens 30 %, z. B. im Bereich von 30 bis 50 %, wobei von diesen mindestens 30 % wiederum mindestens 90 % auf Ethen, Propen, 1-Buten entfallen. Bei der Selektivitätsangabe wird gebildetes Kohlendioxid nicht berücksichtigt (d.h. exklusive CO₂).

In einer besonders bevorzugten Ausführungsform erhält man ein Produktgemisch enthaltend Olefine mit einer Olefin-Kohlenstoff-Selektivität für den C2-C4 - Bereich von mindestens 35 %, z. B. im Bereich von 35 bis 50 %, wobei von diesen mindestens 35 % wiederum mindestens 90 % auf Ethen, Propen, 1-Buten entfallen. Bei der Selektivitätsangabe wird gebildetes Kohlendioxid nicht berücksichtigt (d.h. exklusive CO₂).

Die erhaltenen Olefine werden z. B. in Verfahren zur Herstellung von Polyolefinen, Epoxiden, Oxoprodukten, Acrylnitrilen, Acrolein, Styrol eingesetzt. Siehe auch: Weissermel et al., Industrial Organic Chemistry, Wiley-VCH, Weinheim, 2003, Seiten 145 bis 192 und 267 bis 312.

Alle Druckangaben beziehen sich auf den Absolutdruck.

### Beispiele

### Beispiel 1 (Vergleichskatalysator)

### Herstellung von Mn-dotiertem Carbonyleisenkatalysator durch Imprägnierung

40 g Carbonyleisenmaterial mit einer Korngrößenverteilung an agglomerierten sphärischen Primärpartikeln (Sekundärpartikeln) derart, dass 90 Gew.-% einen Durchmesser zwischen 50 und 71 µm aufweisen, siehe Abbildung 4, wurde ausgehend von Carbonyleisenpulver Typ CN, BASF AG bzw. jetzt BASF SE, durch Behandlung mit Wasserstoff bei mindestens 300 °C hergestellt und unter Umgebungsbedingungen (Raumtemperatur, Normaldruck) mit 4,4 ml wässriger Mangannitratlösung getränkt. Die wässrige Mangannitratlösung wurde durch Auflösen von 1,92 g Mangannitrat (96 %, Riedel de Haen) in 4,4 ml entmineralisiertem Wasser hergestellt. Der getränkte Katalysator wurde 10 h bei 120 °C getrocknet. Der erhaltene Katalysator enthielt 0,94 Gew.-% Mn.

### Beispiel 2 (Vergleichskatalysator)

### Herstellung von K- / Mn-dotiertem Carbonyleisenkatalysator durch Imprägnierung

300g Carbonyleisenmaterial mit einer Korngrößenverteilung an agglomerierten sphärischen Primärpartikeln (Sekundärpartikeln) derart, dass 90 Gew.-% einen Durchmesser zwischen 50 und 100 µm aufweisen, siehe Abbildung 4, wurde ausgehend von Carbonyleisenpulver Typ CN, BASF AG bzw. jetzt BASF SE, durch Behandlung mit Wasserstoff bei mindestens 300 °C hergestellt und unter Umgebungsbedingungen (Raumtemperatur, Normaldruck) mit 33 ml wässriger Kalium- / Mangannitratlösung getränkt. Die wässrige Kalium- / Mangannitratlösung wurde durch Auflösen von 14,08 g Mangannitrat Tetrahydrat (> 98,5 %) und 1,59 g Kaliumnitrat (99 %, Riedel de Haen) in 33 ml entmineralisiertem Wasser hergestellt. Der getränkte Katalysator wurde 4 h bei 120 °C getrocknet. Der erhaltene Katalysator enthielt 0,19 Gew.-% K und 0,94 Gew.-% Mn. Beispiel 3 (erfindungsgemäß)
Herstellung von K- / Mn-dotiertem Carbonyleisenkatalysator (Mischoxid) durch Imprägnierung

150 g Carbonyleisenmaterial mit einer Korngrößenverteilung an agglomerierten sphärischen Primärpartikeln (Sekundärpartikeln) derart, dass 90 Gew.-% einen Durchmesser zwischen 50 und 100 µm aufweisen, siehe Abbildung 4, wurde ausgehend von Carbonyleisenpulver Typ CN, BASF AG bzw. jetzt BASF SE, durch Behandlung mit Wasserstoff bei mindestens 300 °C hergestellt und mit 5 Vol.% Luft in Stickstoff in einem Drehkugelofen bei einer Temperatur bis maximal 35 °C kontrolliert passiviert. Das oberflächlich passivierte Carbonyleisenpulver wird unter Umgebungsbedingungen (Raumtemperatur, Normaldruck) mit 16,5 ml wässriger Kalium- / Mangannitratlösung getränkt. Die wässrige Kalium- / Mangannitratlösung wurde durch Auflösen von 7,23 g Mangannitrat Tetrahydrat (96 %, Riedel de Haen) und 0,79 g Kaliumnitrat (99 %, Riedel de Haen) in 16,5 ml entmineralisiertem Wasser hergestellt. Der getränkte Katalysator wurde 4 h bei 120 °C im Drehkugelofen unter einem Luftstrom von 100 Nl/h getrocknet. Anschließend wird der Katalysator unter einem Argonstrom von 100 Nl/h bei 650 °C für 10 h kalziniert.
Der erhaltene Katalysator enthielt 0,16 Gew.-% K und 0,95 Gew.-% Mn.

### Beispiel 4 (Vergleichskatalysator)

### Reines Carbonyleisenmaterial (50-100 µm)

Carbonyleisenmaterial mit einer Korngrößenverteilung der Sekundärpartikel derart, dass 90 Gew.-% einen Durchmesser im Bereich von 50 bis 100 µm aufweisen, siehe Abbildung 4, wurde ausgehend von Carbonyleisenpulver Typ CN, BASF AG bzw. jetzt BASF SE, durch Behandlung mit Wasserstoff bei mindestens 300 °C hergestellt.

### Beispiel 5

Porenverfüllung von reinem, agglomeriertem Carbonyleisenpulver (Sekundärpartikel) aus Schritt II mit Eisenpentacarbonyl gemäß Schritt IIa und IIb.
Die Menge an Eisenpentacarbonyl, die zur Verfüllung der Poren mit einem Durchmesser von insbesondere < 4000 nm notwendig ist, wurde mittels Quecksilber Porosimetrie (DIN 66133) bestimmt.

200 ml Carbonyleisenmaterial mit einer Korngrößenverteilung der Sekundärpartikel derart, dass 90 Gew.-% einen Durchmesser im Bereich von 50 bis 100 µm aufweisen, siehe Abbildung 4, wurde ausgehend von Carbonyleisenpulver Typ CN, BASF AG bzw. jetzt BASF SE, durch Behandlung mit Wasserstoff bei mindestens 300 °C hergestellt. Das Carbonyleisenmaterial wurde in einem Rührgefäß unter Argonatmosphäre bei 105 °C für 5 h getrocknet. Danach wurden 10 ml Eisenpentacarbonyl zudosiert. Anschließend wurde das Gefäß auf ca. 165 °C Innentemperatur erwärmt. Die Zersetzung erfolgte bei 165 °C unter Rühren der Partikel. Die Reaktion war beendet, wenn im Abgasstrom kein Eisenpentacarbonyl bzw. kein freies Kohlenmonoxid detektiert wurde. Diese Schritte wurden 13 mal wiederholt. Nach beendeter Synthese wurde das Produkt mindestens 12 h mit Argon bei 100 °C gespült, bis der CO- bzw. Fe(CO)₅-Gehalt im Abgas < 0,1 Vol.-ppm betrug.

### Vergleich:

Performance des erfindungsgemäßen Katalysators (Beispiel 3) und der Vergleichskatalysatoren im erfindungsgemäßen Verfahren mit vorheriger identischer Aktivierung

Es wurde eine Reihe von vergleichenden Leistungstests mit je etwa 2,0 g Katalysator (Beispiele 1-3; WHSV = 500 Nl/kg•h) bzw. 1,0 g Katalysator (Beispiel 4; WHSV = 1000 Nl/kg•h) und Inertmaterialverdünnung (Katalysator: Inertstoffe = 1 : 3 Gewichtsverhältnis für Beispiele 2 und 3, bzw. 1 : 4 für Beispiele 1 und 4) durchgeführt. Die Katalysatoren wurden in einen Festbettreaktor eingetragen und in H₂:N₂ (9:1) (molar) 4 h bei 380 °C voraktiviert. Dann wurde Synthesegas mit einer Rate von ungefähr 0,9 Nl/h bei 25 bar in den Reaktor eingetragen und die Temperatur auf 340 °C gesenkt. Als interner Standard für spätere analytische Tests wurde zusätzlich 0,1 Nl/h Stickstoffgas eingeleitet. Die Ergebnisse der über einen Zeitraum von mindestens 75 h durchgeführten Versuche sind nachstehend für die jeweiligen Katalysatorsysteme gezeigt.
(Nl = Normliter = auf Normalbedingungen umgerechnetes Volumen,
WHSV = weight hourly space velocity).

| Katalysator | Beispiel 1 | Beispiel 2 | Beispiel 3 (erfindungsgemäß) | Beispiel 4 |
|---|---|---|---|---|
| Synthesegasverhältnis H₂/CO | 1,0 | 1,0 | 0,93 | 1,0 |
| WHSV [Nl/kg•h] | 500 | 500 | 500 | 1000 |
| % CO-Umsatz | 81 | 93 | 91 | 94 |
| % Kohlenstoffselektivität zu CH₄, ohne CO₂ | 16,2 | 7,6 | 7,6 | 20,1 |
| % Kohlenstoffselektivität zu C2-C6-Olefinen, ohne CO₂ | 52,7 | 49,1 | 50,7 | 35,4 |
| Desaktivierung bis 200 h TOS [Δ C% C2-C6-Olefinen / 100 h] | - | -1,5 | 0 | - |
| % Kohlenstoff C7+, ohne CO₂ | 19,5 | 30,3 | 25,8 | 17,0 |

Bei den Selektivitätsangaben in den Beispielen wird gebildetes Kohlendioxid nicht berücksichtigt (d.h. ohne CO₂).

Man erkennt, dass durch die Dotierung mit Mangan (Beispiel 1) bereits eine deutlich höhere Selektivität zu niederen Olefinen gegenüber reinem CEP (Beispiel 4) erreicht wird. Allerdings ist bei ausschließlich Mn-dotierten Katalysatoren die Kohlenstoffselektivität zu Methan verbesserungswürdig. Durch Kombination von Kalium- und Mangandotierung gelingt die Unterdrückung der Methanbildung bei gleichzeitig hoher Olefinselektivität.

Insbesondere die erfindungsgemäße Herstellung des Kalium- und Mangandotierten Katalysators (Beispiel 3) liefert eine verbesserte Selektivität zu niederen Olefinen bei konstanter Methanselektivität. Weiterhin ist die Desaktivierungsrate des erfindungsgemäßen Katalysators vernachlässigbar im betrachteten Zeitfenster, während in dem direkten Vergleichsbeispiel 2 eine Abnahme der Olefinselektivität mit der Zeit zu beobachten ist.

### Zur Analytik der Reaktionsprodukte:

Die Produktströme wurden über beheizte Streamselektoren und Leitungen nach Auskondensieren der langkettigen Kohlenwasserstoffe in einem Heißabscheider (ca. 160 °C, 25 bar) beprobt und einem online-Gaschromatograph (GC) zugeführt.
GC: Agilent 6890N mit FID und WLD Detektor.
Vorsäulen: CP-Poraplot Q, Länge 12,5 m, ID 0,53 mm, Filmdicke 20 µm
FID:
Injektor250 °C, Splitverhältnis 50:1, Trägergas Helium, Säule Durabond DB-1 (Länge 60 m, ID 0,32 mm, Filmdicke 3 µm), Detektor 280 °C.
WLD:
Injektor 200 °C, Splitverhältnis 10:1, Trägergas Argon, Säule Carboxen 1010 (Länge 30 m, ID 0,53 mm), Detektor 210°C.
Temperaturprogramm: 40 °C-5 min - 7 °C/min - 250 °C-5 min, Trägergas, Helium.

### Folgende Abbildungen 1 bis 3:

Erfindungsgemäß in Schritt II einsetzbares Carbonyleisenpulver (CEP) mit sphärischen Primärpartikeln.

## Patentansprüche

1. Verfahren zur Herstellung eines eisen- und manganhaltigen Heterogenkatalysators, **dadurch gekennzeichnet, dass** es folgende Schritte umfasst:
I. Thermische Zersetzung von gasförmigem Eisenpentacarbonyl unter Erhalt von Carbonyleisenpulver mit sphärischen Primärpartikeln,
II. Behandlung von in Schritt I erhaltenem Carbonyleisenpulver mit Wasserstoff, wobei die metallischen sphärischen Primärpartikel zumindest teilweise agglomerieren,
III. oberflächliche Oxidation der Eisenpartikel aus Schritt II, Agglomerate = Sekundärpartikel, sowie ggf. noch vorhandene Primärpartikel, unter Eisenoxidbildung,
IV. In-Kontakt-bringen der Partikel aus Schritt III mit einer wässrigen Lösung einer Manganverbindung,
V. Trocknung in Gegenwart von Sauerstoff und nachfolgende Kalzination in Abwesenheit von Sauerstoff, wobei zunächst sauerstoffhaltige Manganverbindungen auf den Partikeln resultieren, die schließlich mit dem Eisenoxid zu einem Mischoxid der Formel MnₓFe₃₋ₓO₄ reagieren, mit 0 < x ≤ 2.

2. Verfahren nach Anspruch 1, **dadurch gekennzeichnet, dass** in Schritt III die Oxidation mittels Sauerstoff erfolgt.

3. Verfahren nach Anspruch 1 oder 2, **dadurch gekennzeichnet, dass** in Schritt IV die Partikel mit einer wässrigen Mangansalz-Lösung in Kontakt gebracht werden.

4. Verfahren nach dem vorhergehenden Anspruch, **dadurch gekennzeichnet, dass** es sich bei dem Mangansalz um Mangannitrat oder Mangancarbonat handelt.

5. Verfahren nach einem der vorhergehenden Ansprüche, **dadurch gekennzeichnet, dass** in Schritt V die Trocknung der Partikel bei einer Temperatur im Bereich von 50 bis 150 °C und die Kalzination der Partikel bei einer Temperatur im Bereich von 500 bis 800 °C erfolgt.

6. Verfahren nach einem der vorhergehenden Ansprüche, **dadurch gekennzeichnet, dass** die im Schritt I erhaltenen sphärischen Primärpartikel einen Durchmesser im Bereich von 0,01 bis 50 µm aufweisen.

7. Verfahren nach einem der vorhergehenden Ansprüche, **dadurch gekennzeichnet, dass** die in Schritt III eingesetzten Sekundärpartikel, = Agglomerate, einen Durchmesser im Bereich von 10 bis 250 µm aufweisen.

8. Verfahren nach einem der vorhergehenden Ansprüche, **dadurch gekennzeichnet, dass** die im Schritt I erhaltenen Primärpartikel einen Eisengehalt von größer als 97 Gew.-% aufweisen.

9. Verfahren nach einem der vorhergehenden Ansprüche, **dadurch gekennzeichnet, dass** die im Schritt I erhaltenen Primärpartikel porenfrei sind.

10. Verfahren nach einem der vorhergehenden Ansprüche, **dadurch gekennzeichnet, dass** das im Schritt I erhaltene Carbonyleisenpulver keine fadenförmigen Primärpartikel enthält.

11. Verfahren nach einem der vorhergehenden Ansprüche, **dadurch gekennzeichnet, dass** die Dotierung des im Schritt V erhaltenen Katalysators mit Mn insgesamt im Bereich von 0,5 bis 4 Gew.-%, bezogen auf Eisen, beträgt.

12. Verfahren nach einem der vorhergehenden Ansprüche, **dadurch gekennzeichnet, dass** die Partikel zusätzlich mit insgesamt im Bereich von 0,01 bis 1 Gew.-%, bezogen auf Eisen, an Alkalimetallionen und/oder Erdalkalimetallionen dotiert werden.

13. Verfahren nach einem der vorhergehenden Ansprüche, **dadurch gekennzeichnet, dass** die Partikel zusätzlich mit insgesamt im Bereich von 0,01 bis 1 Gew.-%, bezogen auf Eisen, an Kaliumionen und/oder Natriumionen dotiert werden.

14. Verfahren nach einem der beiden vorhergehenden Ansprüche, **dadurch gekennzeichnet, dass** das die Dotierung in Schritt IV durch In-Kontakt-bringen der Partikel, Sekundärpartikel und ggf. noch vorhandene Primärpartikel, mit einer wässrigen Lösung einer Alkalimetall- und/oder Erdalkalimetallverbindung erfolgt.

15. Verfahren nach einem der vorhergehenden Ansprüche, **dadurch gekennzeichnet, dass** es zwischen den Schritten II und III zusätzlich die folgenden Schritte IIa und IIb umfasst:
IIa. In-Kontakt-bringen der Agglomerate, = Sekundärpartikel, mit Eisenpentacarbonyl,
IIb. Thermische Zersetzung des in Schritt IIa aufgebrachten Eisenpentacarbonyls unter Erhalt von zumindest überwiegend poren- und hohlraumfreien Sekundärpartikeln.

16. Verfahren nach dem vorhergehenden Anspruch, **dadurch gekennzeichnet, dass** in Schritt IIa die Agglomerate mit flüssigem oder gasförmigem Eisenpentacarbonyl in Kontakt gebracht werden.

17. Verfahren nach einem der beiden vorhergehenden Ansprüche, **dadurch gekennzeichnet, dass** in Schritt IIb die thermische Zersetzung des Eisenpentacarbonyls bei einer Temperatur im Bereich von 150 bis 350 °C erfolgt.

18. Eisen- und manganhaltiger Heterogenkatalysator, erhältlich durch ein Verfahren, das die folgenden Schritte umfasst:
I. Thermische Zersetzung von gasförmigem Eisenpentacarbonyl unter Erhalt von Carbonyleisenpulver mit sphärischen Primärpartikeln,
II. Behandlung von in Schritt I erhaltenem Carbonyleisenpulver mit Wasserstoff, wobei die metallischen sphärischen Primärpartikel zumindest teilweise agglomerieren unter Ausbildung von metallischen Sekundärpartikeln mit BET-Oberflächen von kleiner 2 m²/g,
III. oberflächliche Oxidation der Eisenpartikel aus Schritt II, Agglomerate = Sekundärpartikel, sowie ggf. noch vorhandene Primärpartikel, unter Eisenoxidbildung,
IV. In-Kontakt-bringen der Partikel aus Schritt III mit einer wässrigen Lösung einer Manganverbindung,
V. Trocknung in Gegenwart von Sauerstoff bei einer Temperatur von 50 bis 150 °C und nachfolgende Kalzination in Abwesenheit von Sauerstoff, wobei zunächst sauerstoffhaltige Manganverbindungen auf den Partikeln resultieren, die schließlich mit dem Eisenoxid zu einem Mischoxid der Formel MnₓFe₃₋ₓO₄ reagieren, mit 0 < x ≤ 2.

19. Verfahren zur Herstellung von Olefinen durch Umsetzung von Kohlenmonoxid mit Wasserstoff in Gegenwart eines Katalysators, **dadurch gekennzeichnet, dass** man als Katalysator einen eisen- und manganhaltigen Heterogenkatalysator gemäß dem vorhergehenden Anspruch einsetzt.

20. Verfahren nach dem vorhergehenden Anspruch, **dadurch gekennzeichnet, dass** man die Umsetzung bei einer Temperatur im Bereich von 200 bis 500 °C durchführt.

21. Verfahren nach einem der beiden vorhergehenden Ansprüche, **dadurch gekennzeichnet, dass** man die Umsetzung bei einem Absolutdruck im Bereich von 1 bis 100 bar durchführt.

22. Verfahren nach einem der drei vorhergehenden Ansprüche zur Herstellung von C2-C4-Olefinen.

23. Verfahren nach einem der vier vorhergehenden Ansprüche, **dadurch gekennzeichnet, dass** für die Umsetzung Kohlenmonoxid und Wasserstoff im Form von Synthesegas eingesetzt werden.

24. Verfahren nach einem der fünf vorhergehenden Ansprüche, **dadurch gekennzeichnet, dass** Kohlenmonoxid und Wasserstoff in einem Molverhältnis im Bereich von 2 : 1 bis 1 : 2 eingesetzt werden.

25. Verfahren nach einem der beiden vorhergehenden Ansprüche, **dadurch gekennzeichnet, dass** das Synthesegas Kohlendioxid (CO₂) enthält.

## Claims

1. A process for producing an iron- and manganese-comprising heterogeneous catalyst, which comprises the following steps:
I. thermal decomposition of gaseous iron pentacarbonyl to give carbonyl iron powder having spherical primary particles,
II. treatment of carbonyl iron powder obtained in step I with hydrogen, resulting in the metallic spherical primary particles at least partly agglomerating,
III.surface oxidation of the iron particles from step II, agglomerates = secondary particles, and also any primary particles still present, to form iron oxide,
IV. contacting of the particles from step III with an aqueous solution of a manganese compound,
V. drying in the presence of oxygen and subsequent calcination in the absence of oxygen, resulting firstly in oxygen-comprising manganese compounds on the particles and finally reaction of these with the iron oxide to form a mixed oxide of the formula MnₓFe₃₋ₓO₄, where 0 < x ≤ 2.

2. The process according to claim 1, wherein the oxidation in step III is carried out by means of oxygen.

3. The process according to claim 1 or 2, wherein the particles are brought into contact with an aqueous manganese salt solution in step IV.

4. The process according to the preceding claim, wherein the manganese salt is manganese nitrate or manganese carbonate.

5. The process according to any of the preceding claims, wherein the drying of the particles in step V is carried out at a temperature in the range from 50 to 150°C and the calcination of the particles is carried out at a temperature in the range from 500 to 800°C.

6. The process according to any of the preceding claims, wherein the spherical primary particles obtained in step I have a diameter in the range from 0.01 to 50 µm.

7. The process according to any of the preceding claims, wherein the secondary particles, = agglomerates, used in step III have a diameter in the range from 10 to 250 µm.

8. The process according to any of the preceding claims, wherein the primary particles obtained in step I have an iron content of greater than 97% by weight.

9. The process according to any of the preceding claims, wherein the primary particles obtained in step I are pore-free.

10. The process according to any of the preceding claims, wherein the carbonyl iron powder obtained in step I comprises no thread-like primary particles.

11. The process according to any of the preceding claims, wherein the total doping of the catalyst obtained in step V with Mn is in the range from 0.5 to 4% by weight, based on iron.

12. The process according to any of the preceding claims, wherein the particles are additionally doped with a total amount in the range from 0.01 to 1% by weight, based on iron of alkali metal ions and/or alkaline earth metal ions.

13. The process according to any of the preceding claims, wherein the particles are additionally doped with a total amount in the range from 0.01 to 1% by weight, based on iron of potassium ions and/or sodium ions.

14. The process according to either of the two preceding claims, wherein the doping in step IV is effected by bringing the particles, secondary particles and any primary particles still present, into contact with an aqueous solution of an alkali metal compound and/or alkaline earth metal compound.

15. The process according to any of the preceding claims, which additionally comprises, between steps II and III, steps IIa and IIb below:
IIa. contacting of the agglomerates, = secondary particles, with iron pentacarbonyl,
IIb. thermal decomposition of the iron pentacarbonyl applied in step IIa to give at least predominantly pore- and void-free secondary particles.

16. The process according to the preceding claim, wherein the agglomerates are brought into contact with liquid or gaseous iron pentacarbonyl in step IIa.

17. The process according to either of the two preceding claims, wherein the thermal decomposition of the iron pentacarbonyl in step IIb is carried out at a temperature in the range from 150 to 350°C.

18. An iron- and manganese-comprising heterogeneous catalyst which can be obtained by a process which comprises the following steps:
I. thermal decomposition of gaseous iron pentacarbonyl to give carbonyl iron powder having spherical primary particles,
II. treatment of carbonyl iron powder obtained in step I with hydrogen, resulting in the metallic spherical primary particles at least partly agglomerating to form metallic secondary particles having BET surface areas of less than 2 m²/g,
III.surface oxidation of the iron particles from step II, agglomerates = secondary particles, and also any primary particles still present, to form iron oxide,
IV. contacting of the particles from step III with an aqueous solution of a manganese compound,
V. drying in the presence of oxygen at a temperature of from 50 to 150°C and subsequent calcination in the absence of oxygen, resulting firstly in oxygen-comprising manganese compounds on the particles and finally reaction of these with the iron oxide to form a mixed oxide of the formula MnₓFe₃₋ₓO₄, where 0 < x ≤ 2.

19. A process for preparing olefins by reacting carbon monoxide with hydrogen in the presence of a catalyst, wherein an iron- and manganese-comprising heterogeneous catalyst according to the preceding claim is used as catalyst.

20. The process according to the preceding claim, wherein the reaction is carried out at a temperature in the range from 200 to 500°C.

21. The process according to either of the two preceding claims, wherein the reaction is carried out at an absolute pressure in the range from 1 to 100 bar.

22. The process according to any of the three preceding claims for preparing C2-C4-olefins.

23. The process according to any of the four preceding claims, wherein carbon monoxide and hydrogen are used in the form of synthesis gas for the reaction.

24. The process according to any of the five preceding claims, wherein carbon monoxide and hydrogen are used in a molar ratio in the range from 2:1 to 1:2.

25. The process according to either of the two preceding claims, wherein the synthesis gas comprises carbon dioxide (CO₂).

## Revendications

1. Procédé pour la production d'un catalyseur hétérogène contenant du fer et du manganèse, **caractérisé en ce qu'**il comprend les étapes suivantes :
I. décomposition thermique de pentacarbonyle de fer gazeux avec obtention de poudre de fer-carbonyle à particules primaires sphériques,
II. traitement de poudre de fer-carbonyle obtenue dans l'étape I par de l'hydrogène, les particules primaires sphériques métalliques s'agglomérant au moins partiellement,
III. oxydation superficielle des particules de fer provenant de l'étape II, agglomérats = particules secondaires ainsi qu'éventuellement particules primaires encore présentes, avec formation d'oxyde de fer,
IV. mise en contact des particules provenant de l'étape III avec une solution aqueuse d'un composé de manganèse,
V. séchage en présence d'oxygène et calcination subséquente en absence d'oxygène, de sorte que d'abord il en résulte sur les particules des composés de manganèse oxygénés qui enfin réagissent avec l'oxyde de fer pour donner un oxyde mixte de formule MnₓFe₃₋ₓO₄, où 0 < x ≤ 2.

2. Procédé selon la revendication 1, **caractérisé en ce que** dans l'étape III l'oxydation s'effectue au moyen d'oxygène.

3. Procédé selon la revendication 1 ou 2, **caractérisé en ce que** dans l'étape IV on met les particules en contact avec une solution aqueuse de sel de manganèse.

4. Procédé selon la revendication précédente, **caractérisé en ce que** pour ce qui est du sel de manganèse il s'agit de nitrate de manganèse ou de carbonate de manganèse.

5. Procédé selon l'une quelconque des revendications précédentes, **caractérisé en ce que** dans l'étape V le séchage des particules s'effectue à une température dans la plage de 50 à 150 °C et la calcination des particules s'effectue à une température dans la plage de 500 à 800 °C.

6. Procédé selon l'une quelconque des revendications précédentes, **caractérisé en ce que** les particules primaires sphériques obtenues dans l'étape I présentent un diamètre dans la plage de 0,01 à 50 µm.

7. Procédé selon l'une quelconque des revendications précédentes, **caractérisé en ce que** les particules secondaires, = agglomérats, utilisées dans l'étape III, présentent un diamètre dans la plage de 10 à 250 µm.

8. Procédé selon l'une quelconque des revendications précédentes, **caractérisé en ce que** les particules primaires obtenues dans l'étape I présentent une teneur en fer de plus de 97 % en poids.

9. Procédé selon l'une quelconque des revendications précédentes, **caractérisé en ce que** les particules primaires obtenues dans l'étape I sont exemptes de pores.

10. Procédé selon l'une quelconque des revendications précédentes, **caractérisé en ce que** la poudre de fer-carbonyle obtenue dans l'étape I ne contient pas de particules primaires filiformes.

11. Procédé selon l'une quelconque des revendications précédentes, **caractérisé en ce que** le dopage du catalyseur obtenu dans l'étape V avec Mn vaut au total dans la plage de 0,5 à 4 % en poids, par rapport au fer.

12. Procédé selon l'une quelconque des revendications précédentes, **caractérisé en ce que** les particules sont en outre dopées avec au total dans la plage de 0,01 à 1 % en poids, par rapport au fer, d'ions de métaux alcalins et/ou d'ions de métaux alcalino-terreux.

13. Procédé selon l'une quelconque des revendications précédentes, **caractérisé en ce que** les particules sont en outre dopées avec au total dans la plage de 0,01 à 1 % en poids, par rapport au fer, d'ions potassium et/ou d'ions sodium.

14. Procédé selon l'une quelconque des deux revendications précédentes, **caractérisé en ce que** le dopage dans l'étape IV s'effectue par mise en contact des particules, particules secondaires et éventuellement particules primaires encore présentes, avec une solution aqueuse d'un composé de métal alcalin et/ou d'un composé de métal alcalino-terreux.

15. Procédé selon l'une quelconque des revendications précédentes, **caractérisé en ce qu'**entre les étapes II et III il comprend en outre les étapes IIa et IIb suivantes :
IIa. Mise en contact des agglomérats, = particules secondaires, avec du pentacarbonyle de fer,
IIb. Décomposition thermique du pentacarbonyle de fer appliqué dans l'étape IIa, avec obtention de particules secondaires au moins en majeure partie exemptes de pores et de cavités.

16. Procédé selon la revendication précédente, **caractérisé en ce que** dans l'étape IIa on met les agglomérats en contact avec du pentacarbonyle de fer liquide ou gazeux.

17. Procédé selon l'une quelconque des revendications précédentes, **caractérisé en ce que** dans l'étape IIb la décomposition thermique du pentacarbonyle de fer s'effectue à une température dans la plage de 150 à 350 °C.

18. Catalyseur hétérogène contenant du fer et du manganèse, pouvant être obtenu par un procédé qui comprend les étapes suivantes :
I. décomposition thermique de pentacarbonyle de fer gazeux avec obtention de poudre de fer-carbonyle à particules primaires sphériques,
II. traitement de poudre de fer-carbonyle obtenue dans l'étape I par de l'hydrogène, les particules primaires sphériques métalliques s'agglomérant au moins partiellement avec formation de particules secondaires métalliques à surfaces BET de moins de 2 m²/g,
III. oxydation superficielle des particules de fer provenant de l'étape II, agglomérats = particules secondaires ainsi qu'éventuellement particules primaires encore présentes, avec formation d'oxyde de fer,
IV. mise en contact des particules provenant de l'étape III avec une solution aqueuse d'un composé de manganèse,
V. séchage en présence d'oxygène à une température de 50 à 150 °C et calcination subséquente en absence d'oxygène, de sorte que d'abord il en résulte sur les particules des composés de manganèse oxygénés, qui enfin réagissent avec l'oxyde de fer pour donner un oxyde mixte de formule MnₓFe₃₋ₓO₄, où 0 < x ≤ 2.

19. Procédé selon la production d'oléfines par mise en réaction de monoxyde de carbone avec de l'hydrogène en présence d'un catalyseur, **caractérisé en ce qu'**on utilise comme catalyseur un catalyseur hétérogène contenant du fer et du manganèse selon la revendication précédente.

20. Procédé selon la revendication précédente, **caractérisé en ce qu'**on effectue la réaction à une température dans la plage de 200 à 500 °C.

21. Procédé selon l'une quelconque des deux revendications précédentes, **caractérisé en ce qu'**on effectue la réaction sous une pression absolue dans la plage de 1 à 100 bars.

22. Procédé selon l'une quelconque des trois revendications précédentes, pour la production d'oléfines en C₂-C₄.

23. Procédé selon l'une quelconque des quatre revendications précédentes, **caractérisé en ce que** pour la réaction on utilise du monoxyde de carbone et de l'hydrogène sous forme de gaz de synthèse.

24. Procédé selon l'une quelconque des cinq revendications précédentes, **caractérisé en ce qu'**on utilise le monoxyde de carbone et l'hydrogène en un rapport molaire dans la plage de 2:1 à 1:2.

25. Procédé selon l'une quelconque des deux revendications précédentes, **caractérisé en ce que** le gaz de synthèse contient du dioxyde de carbone (CO₂).
